# EUROPEAN PATENT APPLICATION

(11) **EP 3 248 749 A1**
(43) Date of publication of application: **29.11.2017**
(21) Application number: 16171037.1
(22) Date of filing: 24.05.2016
(51) Int. Cl.: B29C 33/06, B29C 45/73, B29C 45/76, B29C 45/78, B29C 51/42, B29C 51/46, B29C 59/02, B29C 33/02

(54) **METHOD AND DEVICE FOR CONTROLLING A TOOL**

(71) Applicant: TcTech Sweden AB, 374 35 Karlshamn (SE)
(72) Inventor: Jäderberg, Jan, 163 47 SPÅNGA (SE)
(74) Representative: Industripatent i Växjö AB

(57) **Abstract**

The present disclosure relates to a method and a device for determining the temperature of an active surface in a plastic embossing tool. A tool half is fed with a high frequency AC current. The voltage, current and phase difference input to the tool is determined, and from these parameters, a resistivity of a top layer, where a greater part of the heat development takes place, is determined. This resistivity in turn can be used to determine the temperature in the top layer. Using this information, a manufacturing process can be closely monitored and controlled, for instance to ensure that a minimum temperature is attained for a predetermined time during embossing.

## Description

### Technical field

The present disclosure relates to method for controlling a tool for shaping a plastic material, wherein the tool has a tool half with a heating arrangement comprising a top layer presenting an active surface that is used to reshape the plastic, a coil feeding an alternating current to the tool half in order to induce an electromagnetic field in the tool half, and an electromagnetic transfer arrangement conveying the energy of the electromagnetic field to the top layer, such that heat is developed in the top layer.

### Background

Such a tool is described in WO-2013/002703-A1. Typically, the tool may be used to emboss a fine pattern on a more or less flat plastic blank. By applying pressure on the blank between two tool halves and actively heating the blank, a fine pattern may be replicated on the blank. The tool may then cool the plastic which is subsequently removed from the tool. A similar tool may also be used for an injection molding process.

The active heating, which is provided by the coil, is controlled by an inverter that feeds the alternating current to the coil. In order to obtain a desired result, the applied pressure in the tool and the amount of power fed to the coils can be determined experimentally.

When producing flat light guides, as well as other products with demanding requirements as regards replication of very fine structures, it may be desired to control the process in more detail to obtain a high yield in terms of finished products with sufficiently high quality.

One problem associated with a method as initially defined is therefore to improve the method and the tool such that a more detailed control of the process can be achieved.

### Summary of the invention

One object of the present disclosure is therefore to obtain a method for controlling a tool for shaping a plastic material with improved precision. This object is achieved by means of the method defined in claim 1. More specifically, in a tool of the initially mentioned kind, the input current, voltage and phase angle to the coil is measured. It is calculated, based on the measured parameters, a resistance of the top layer. With this resistance as input data, an estimated top layer temperature is determined, and the tool may be controlled based on the estimated temperature. This means that, without the use of a dedicated temperature sensor located in or close to the top layer, data corresponding to the top layer temperature, which affects the processing of the plastic material to a great extent, can be used e.g. in a control loop that controls the amount of electric energy supplied to a tool half. For instance, in a simple case, it can be determined whether a specific target temperature in the top layer is reached, and, if so, that power fed to the coil can be switched off. This may be used to assert that a certain processing of the plastic is achieved, and may reduce over-processing which may in some cases result in a lower quality and often in unnecessary long production cycle times.

It is also possible to determine the top layer temperature for other purposes than controlling the supplied energy, for instance in a verification process. Therefore, a corresponding method for determining a top layer temperature is considered as well.

The coil may be fed by an inverter, and the voltage, current and phase difference may then be determined from the current, voltage and phase difference as outputted from the inverter. Inverters may provide such interfaces that can be used to this end.

It is possible to determine the top layer temperature by means of a lookup table or function defining a temperature for an inputted resistivity. Such a lookup table or function may be determined experimentally, and give accurate estimations even for complex top layer structures.

Typically, the controlling may be carried out such that a minimum top layer temperature is achieved during a heating phase or such that a minimum top layer temperature during a time period of a minimum length is attained. Such methods provide reliable means for assessing that sufficient re-shaping of a plastic material is carried out.

During a cooling phase of the process cycle of the tool, an alternating power pulse with a duration typically around 0.5-1.0 ms, but at most likely shorter than 20 ms is inputted to the coil in order to measure the top layer temperature. This serves to determine the temperature during the cooling phase without substantially heating the product.

A corresponding tool for processing a plastic material is also considered including a tool and a control arrangement that is adapted to carry out the method defined above. In general, that device is configured to carry out the above mentioned steps.

### Brief description of the drawings

Fig 1 illustrates schematically an embossing/pressing tool.
Fig 2 illustrates schematically layers in a tool half.
Fig 3 illustrates an electric equivalent layout for the layers of fig 2.
Fig 4 shows blocks in a temperature determining unit.
Fig 5 illustrates power application and resulting temperature during a schematic process cycle.

### Detailed description

The present disclosure relates to a tool such as described in WO-2013/002703-A1. That tool may be primarily intended for embossing/pressing a blank but could also be used for injection molding.

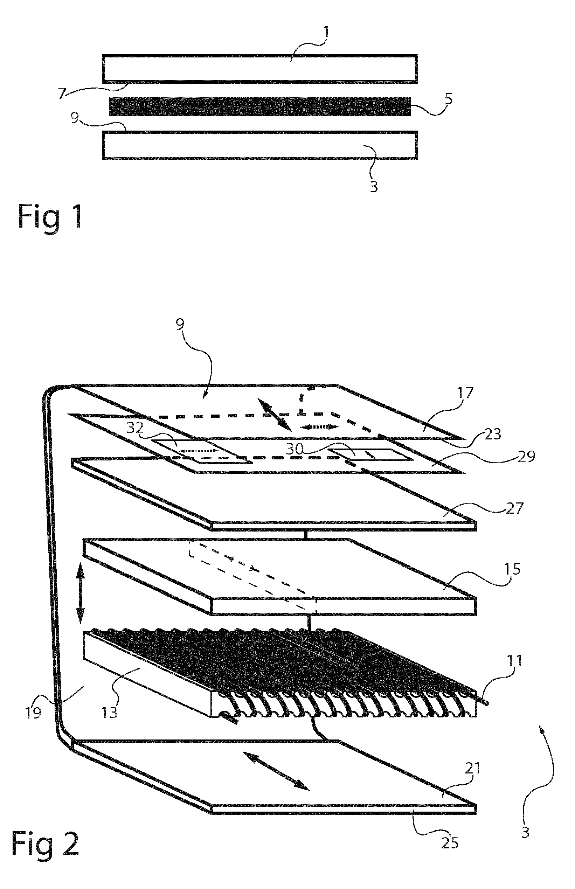

In general, with reference to fig 1, the tool comprises a first 1 and a second 3 tool half. If used for embossing/printing, a solid resin blank 5 is placed in between the tool halves, which are pressed together while heating the blank. The active surfaces 7, 9 of the halves 1, 3, i.e. the surfaces being in contact with the blank 5, may have a fine pattern that is replicated on the blank in this process. In order to achieve short cycle times and efficient production, the active surfaces should be quickly heated and then be allowed to cool before the processed blank is removed and replaced with an unprocessed blank. Either or both of the tool halves may include a stack of layers designed to provide efficient inductive heating of the active surface or surfaces, as well as optional cooling ducts, where, during at least a part of the production cycle, a fluid flows to cool the embossed blank.

Fig 2 illustrates schematically an exploded view of a stack of layers used in a tool half in the aforementioned document, which are used to provide efficient heating of the active surface 9. An inductive coil 11 is used to provide the heating energy. The coil may comprise e.g. copper or aluminum wires, possibly Litz-wires, to obtain low resistivity and high efficiency at high frequencies (e.g. 25kHz). The coil windings are provided in a coil carrier layer 13, which may be made of a material with high relative magnetic permeability, e.g. 300 at room temperature, and very high electric resistivity, e.g. 2.5*10⁻³ΩM. One example of a material useful for the coil carrier layer 13 is PERMEDYN MF1 (trademark) which comprises granules of ferromagnetic material baked together by an electrically insulating resin. Thus, it is a material that is prone to conduct magnetic fields but that does not convey electric currents to any greater extent. The coil windings 11 may be placed in open grooves in the coil carrier.

On top of the coil carrier layer 13, a low resistivity intermediate layer 15 is placed. This layer may be a few centimeters thick and consist for instance of aluminum or copper. The intermediate layer 15 forms an inner current loop, as will be described. Additionally, the intermediate layer, thanks to its relative thickness, may be used to provide structural features that are useful in a tool of this kind. For instance, cooling channels may be provided that may convey a cooling fluid during at least a part of the process cycle. Further it is possible to provide a fluid filled flat layer in the intermediate part that equalized applied mechanical pressure and reduces applied shear forces.

On the other side of the coil carrier layer 13, as seen from the intermediate layer 15, a backing layer is located 21. The backing layer 21 also comprises a low resistivity material such as aluminum or copper, which may be the same material as the intermediate layer 15. The backing layer 21 may be thinner than the intermediate layer, typically a few millimeters, as long as it is capable of carrying significant alternating currents without developing a lot of heat. Generally, it should be thicker than the skin depth at the relevant frequency.

When a high-frequency current is applied to the coil 11, the resulting magnetic field induces alternating currents in the backing layer 21 and in the intermediate layer 15.

The currents induced in the backing layer 21 will form a closed outer loop around the tool half as a whole via a top layer 17. The top layer 17 is connected, via lateral connectors 19, to the backing layer 21. Only a rear lateral connector 19 is shown in fig 2, connecting the rear edge of the top layer 17 with the rear edge of the backing layer 21. However, a similar (not shown) lateral connector connects the front edge 23 of the top layer 17 with the front edge 25 of the backing layer 21.

Therefore, the alternating currents induced in the backing layer 21 can flow in closed loops, e.g. through the top layer 17 via the front lateral connector through the backing layer 21 and via the rear lateral connector 19 back to the top layer 17. While the lateral connectors 19 and the backing layer 21 may be made in low resistivity materials such as aluminum or copper, the top layer 17 may be made in a material which, though still conductive, has a higher resistivity, such as for instance an austenitic and/or ferromagnetic steel. Therefore, almost all of the heat developed due to these currents is developed in the top layer 17. As the top layer 17 is close to or constitutes the active surface 9 that reshapes the material, this is advantageous.

A number of materials or combinations of materials are possible for the top layer 17, and the layer may typically be laminated, for instance with a ferromagnetic steel layer of 0.25 mm with a thinner Nickel stamper on top.

The currents induced in the intermediate layer form closed inner loops that, due to the skin effect, run in the surface of the intermediate layer, as illustrated. Due to the low resistivity, very little heat is produced in the intermediate layer 15, from this current. As mentioned, the intermediate layer 15 may also be provided with cooling channels (not shown) that convey a cooling liquid during a cooling phase of the production cycle, etc.

The current in the top surface of the intermediate layer 15 in turn induces a current in the top layer 17, that interacts with the currents of the outer loop and shapes the magnetic field, creating a very uniform distributed current in the active surface 9.

In addition to the layers already mentioned, a tool half 3 may comprise a thermal resistance layer 27 placed in between the top layer 17 and the active intermediate layer 15. The thermal resistance layer, which may comprise a ceramic material, may be electrically inactive, and have a thermal conductivity substantially lower than the one of the intermediate layer 15. The thermal resistance layer serves to reduce the removing of heat from the top layer 17 to the intermediate layer 15. This means that higher peak temperatures can be achieved at the expense of slower cooling of the blank after processing.

Further, a mask layer 29 may be added directly beneath the top layer. The mask layer may comprise insulating portions and highly conductive portions intervening between those insulating portions in a predetermined pattern. The highly conductive portions or patches 30 have lower resistivity than the top layer, and are in contact with the top layer such that the top layer becomes partially short-circuited at those areas. This provides means for varying the heat development over the active area as the highly conductive area by-pass the current in parts of the top layer while not developing any greater amounts of heat themselves due to their low resistivity.

The mask layer may also comprise soft magnetic patches 32, with much higher magnetic permeability than the top layer, that absorb the magnetic field, perpendicularly to the electric current, which allows further varying of the heat development over the surface. The soft magnetic patches have very high relative permeability bypassing the magnetic field from the top layer thereby providing a similar effect as the conductive portions 30, but with a different direction of extension.

The above disclosed tool has proved to provide very efficient heating of an active surface during pressing/embossing. When a high frequency pulse is applied, the temperature in the top layer rises very quickly to heat the blank inserted in the tool to enhance the embossing effect. As both cooling and heating may take place, cycle times can be shortened. Very little heat development takes place outside the top layer 17. By applying a pulse with a length and power determined experimentally, a suitable heating effect has been obtained.

It has however been found that carefully controlling the top layer temperature over time can improve the process further.

One simple way of measuring the temperature would be to arrange a temperature sensor at the top layer, for instance a PTC or NTC resistor. Measuring a voltage change over that resistor could provide a useful measure of the top layer temperature. However, a resistor or other device in connection with the actual top layer could disturb the temperature development, either by locally affecting the electromagnetic field developing the heat or by leading heat away to a greater or lesser extent as compared to other parts of the top layer. Needless to say, this could also affect the data produced. Further, the environment would be hostile to a sensor with associated electronics as heat is developed, high electromagnetic field strengths exist, and a high mechanical pressure (e.g. 5 MPa) is applied.

The thermal resistance layer 27 works as a low pass filter for the temperature. On the top surface side of the thermal resistance layer 27, detailed information of the temperature at the embossing surface of the plastic can be extracted. Below the thermal layer 27 however, the temperature information is more or less lost and will be hard to use to control the process. Using a sensor for instance in the intermediate layer 15 would therefore not be a viable option. In general, it is very difficult to find a suitable location for a sensor in the stack of layers making up the tool half.

Another way of estimating the temperature would be to determine the instantaneous applied energy. However, this does not give an accurate description of the temperature, as the pace with which heat is conducted away from the top layer can vary depending on applied pressure, phase of blank (e.g. melting), etc.

In the present disclosure, the inventor has found way to determine the top layer temperature in an efficient and accurate way that does not affect the heat development. Further, a number of ways of controlling the temperature to provide a desired result have been found.

Very briefly, the instantaneous resistance corresponding to a resistivity of the top layer is determined, and since this resistivity depends on the temperature of the top layer, the resistivity or resistance is in turn used to determine the temperature.

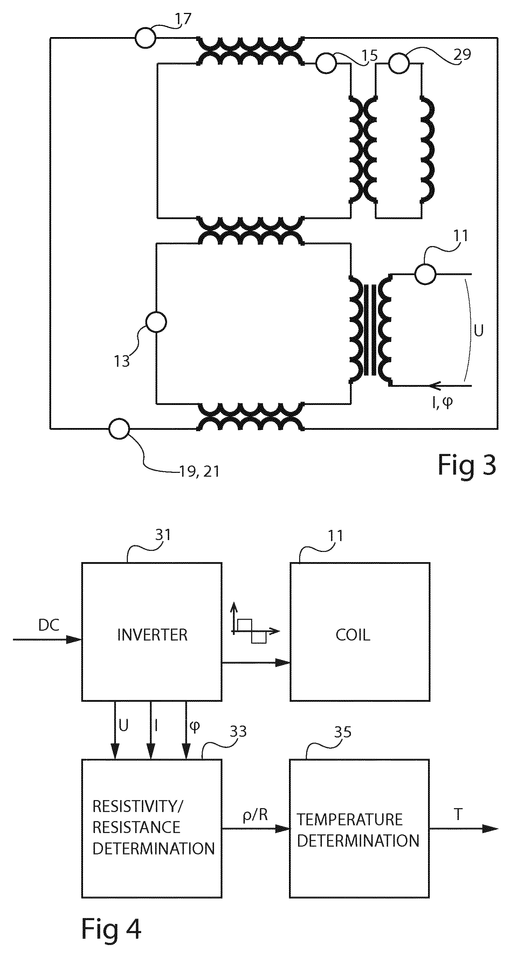

Fig 3 illustrates an electric equivalent layout for the layers of fig 2. Needless to say, there is a strong inductive coupling between the coil 11 and the coil carrier 13. The coil carrier in turn induces currents in the backing layer 21, but also in the intermediate layer 15 and to some extent in the lateral connectors 19. The induced currents in the intermediate layer 15 themselves induce currents in the top layer 17. The two induced current loops, outer 14 and inner 16, interact and create a uniform distributed current density over the top layer heating area.

If soft magnetic patches are disposed in the mask layer 29, those patches are themselves inductive, and will have a strong magnetic coupling to the intermediate layer 15 as well.

Of course, the equivalent layout of fig 3 renders relatively complex interdependencies between the magnetic fields and currents that are generated throughout the material stack. Thanks to the fact that high currents and relatively high resistance are present only in the top layer, there will however be a well-defined relationship between the active power fed to the coil and the resistance of the top layer.

The resistance of the top layer is of course directly linked to the resistivity thereof. Apart from the resistivity, the resistance depends on the form of the top layer, i.e. a longer top layer, in between the lateral connectors, generally renders the resistance higher, while a thicker or wider top layer results in a lower resistance. The resistance is also determined by a combination of the relative magnetic permeability and the frequency and waveform used. Those parameters define e.g. the skin depth which in turn determines the current density and thus the resistance. However, in order to determine the resistivity, the other variable parameters can be considered constant.

Fig 4 shows blocks in a temperature determining unit. An inverter 31 is used to feed the coil 11. In one example, using a provided DC voltage, an AC voltage is generated with desired frequency and waveform, typically a square wave at 25kHz, although other waveforms may be generated depending on the inverter used and the frequency may be varied within a wide range. Different types of inverters are conceivable including direct AC-AC inverters not having an intermediate DC step.

Such an inverter may comprise control circuitry that can output data about the outputted electric power. Alternatively, it is possible to provide a dedicated measuring circuitry in between the inverter and the coil.

As indicated in fig 4, the inverter can thus output the voltage, U, current, I, and the phase difference, cp, between the voltage and the current. The delivered active power may then, as well known, be determined by the formula P=UI*cos(ϕ), and as this is directly connected to the power consumed in the top layer, as very little heat will be developed in other parts of the stack. The top layer resistance can be determined as R=U/I*cos(ϕ). It is therefore possible in a functional block 33 to calculate the instantaneous resistance from data produced by the inverter. For a given top layer 17, heated with a given frequency and waveform this resistance is directly convertible to a determined resistivity, as there exists a one-to-one relationship there between. The resistivity/resistance may be used in another functional block 35 to determine the temperature.

In most conceivable top layers, the resistivity depends more or less linearly to the top layer temperature. For instance, at 20°, an austenitic steel may have a resistivity of 10.4*10⁻⁶ Ωm, while at 100°C the resistivity is 11.4*10⁻⁶ Ωm.

It would be possible to analytically establish a model that for a given material and configuration provides a temperature for any given provided active power level.

However, it may be more practical to obtain a lookup table providing this function. Such a lookup table may be generated experimentally by providing an active power ramp and measuring the resulting top layer temperatures for instance with a contactless infrared temperature sensor. This may be done while the tool is open providing access to the active surface. From such a lookup table, a function may be established that provides an equivalent result and handles interpolation. If a mask layer is used it may be advantageous to measure the temperature at a location of the active surface that will have a maximal temperature rather than where the heat development is altered by a patch.

It should be noted that it is not necessary to actually determine the active power, rather that data corresponding to voltage, current and phase can provide an estimate of the present resistance in the top layer. Resistance and resistivity are interconnected by a form factor that in most cases need only be determined once for a given tool half stack configuration and frequency/wave form applied, and therefore the connection between resistivity and temperature can be readily translated into a resistance-temperature dependence.

Using the above outlined approach, it is possible to instantly determine the temperature of the top layer. The resistivity determining block 33 and the temperature determining block 35 may be devised as an FPGA circuit to enable quick processing. In this way, the temperature may be determined at interval as low as 10µs.

This means that a feedback loop can carefully controlling the top layer temperature by varying the amount of power fed to the tool half over time can improve the process further.

In a basic example, the top layer temperature data is used to ensure that a minimum temperature is attained, and when this temperature is reached, the heating can be switched off. For instance, it could be desired depending on process circumstances to determine that a temperature exceeding the blank melting point with a number of degrees should be reached

In a further developed example, the above-mentioned minimum temperature is attained during a predetermined period of time. This may allow the printing of a very fine pattern that may need some time to set at a high temperature. Another control parameter, that can be added, is to ensure that a maximum temperature is not exceeded. This may be used to avoid undesired over-heating of the plastic which could alter its molecular structure.

Needless to say, these control schemes could be used independent of each other. In general, the tool is controlled to obtain a desired temperature envelope during a process cycle. Measuring of temperature can also be used for other purposes than a control loop.

Even during the cooling phase measuring can take place, for instance to ensure that the active surface is cool enough for the finished product to be removed, or that the cooling is carried out at a predetermined pace. This can be accomplished by feeding very short AC pulses, typically about 0.5 ms in duration, to the coil, which do not substantially heat the tool but still provide temperature data.

This feature may be used to ensure that the temperature does not drift in between subsequent production cycles, such that a consistent end product quality can be achieved. Further it can be ensured if desired that the finished product is removed from the tool at an optimal temperature.

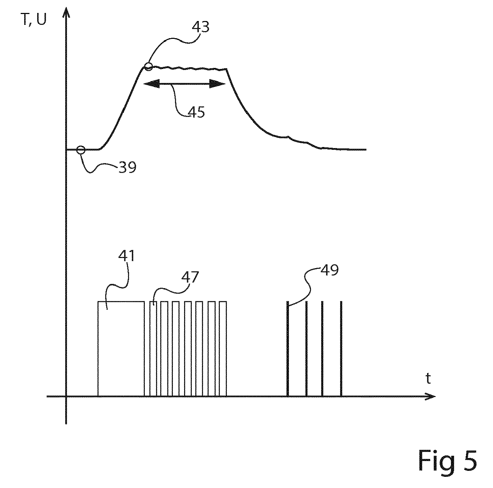

One example of a product cycle is shown in fig 5. A blank is inserted into the tool which has an initial temperature 39 close to room temperature, and pressure is applied. Initially a long pulse 41 is applied to the tool coil, which causes the top layer active surface temperature to rise to a target temperature 43 which is suitable for processing the blank. The active surface is kept close to this temperature during a predetermined period of time 45 by regularly applying a number of pulses 47 with a pulse frequency and duration suitable for maintaining the target temperature without increasing the temperature further. Once the blank has been processed during the predetermined time period, the processed blank is allowed to cool off, optionally by means of a cooling fluid in the tool half as known per se. During this phase, very brief pulses 49 may be fed to the coil to measure the top layer temperature. As illustrated, those short pulses do not disturb the cooling phase to any greater extent.

It should be noted that, if both tool halves are heated, a similar heating scheme may be used, however in some cases, for instance if different patterns are imprinted at either side of the blank, different schemes may also be used.

One example of determination of temperatures is given in the following table:

| U [V] | I [A] | Φ [°] | R [Ω] | T_{estimated} [°C] | T_{measured} [°C] |
|---|---|---|---|---|---|
| 558 | 51,2 | -0,418 | 10,75 | 51,7 | 52,8 |
| 555 | 50,8 | 0,054 | 10,93 | 61,5 | 59,8 |
| 483 | 42,8 | -0,066 | 11,29 | 81,2 | 81,5 |

This data was obtained with a material stack having the following properties and fed with a 25 kHz pulse:

| Layer | Material | Thickness | Relevant property |
|---|---|---|---|
| Coil carrier | Somaloy 500 | 30 mm | µᵣ= 650 |
| Top layer | Steel: UHB 15LM Uddeholm | 0.20 mm | Ferromagnetic |
| Backing layer | Copper | 2.0 mm | 1.68*10⁻⁸ Ωm 10 |
| Intermediate layer | Aluminum | 25 mm | 2.82*10⁻⁸ Ωm |
| Thermal resistance layer | Thermal sprayed Zirconium Oxide | 1.5 mm | k= 1.1 W/(mK) |

The present disclosure is not restricted to the examples given above, and may be varied and altered in different ways within the scope of the appended claims.

## Claims

1. A method for controlling a tool for shaping a plastic material, wherein the tool has a tool half (3) with a heating arrangement comprising a top layer (17) presenting an active surface (9) that is used to shape the plastic, and a coil (11) feeding an alternating current to the tool half in order to induce an electromagnetic field in the tool half, wherein the tool is configured such that heat is developed mainly in the top layer (17), **characterized by**:
- measuring the voltage, current and phase difference input to the coil;
- determining, based on the measured voltage, current and phase difference, an estimated resistivity or resistance of the top layer;
- determining, based on the estimated resistivity or resistance, an estimated top layer temperature; and
- controlling the tool based on the estimated temperature.

2. A method according to claim 1, wherein the coil is fed by an inverter (31) and data corresponding to the current, voltage and phase difference is outputted from the inverter.

3. A method according to claim 1, wherein the top layer temperature is determined by means of a lookup table or an equivalent function defining a temperature for an inputted resistivity or resistance.

4. A method according to any of claims 1-3, wherein the controlling is carried out such that a minimum top layer temperature is achieved during a heating phase.

5. A method according to any of claims 1-4, wherein the controlling is carried out such that a minimum top layer temperature during a time period of a minimum length is attained.

6. A method according to any of claims 1-5, wherein during a cooling phase of the process cycle of the tool, an alternating power pulse with a duration shorter than 20 ms is inputted to the coil in order to measure the top layer temperature.

7. A tool for shaping a plastic material, wherein the tool has a tool half (3) with a heating arrangement comprising a top layer (17) presenting an active surface (9) for reshaping the plastic, a coil (11) feeding an alternating current to the tool half in order to induce an electromagnetic field in the tool half, and an electromagnetic transfer arrangement conveying the electromagnetic field to the top layer, such that heat is developed in the top layer, **characterized by**: the tool being configured to measure the voltage, current and phase difference input to the coil; determine (33), based on the measured voltage, current and phase difference, an estimated resistivity or resistance of the top layer; determine (35), based on the resistivity or resistance, an estimated top layer temperature; and control the tool based on the estimated temperature.

8. A method for determining a temperature in a tool for shaping a plastic material, wherein the tool has a tool half (3) with a heating arrangement comprising a top layer (17) presenting an active surface (9) that is used to reshape the plastic, and a coil (11) feeding an alternating current to the tool half in order to induce an electromagnetic field in the tool half, wherein the tool is configured such that heat is developed mainly in the top layer **characterized by**:
- measuring the voltage, current and phase difference input to the coil;
- determining, based on the measured voltage, current and phase difference, an estimated resistivity or resistance of the top layer; and
- determining, based on the resistivity or resistance, an estimated top layer temperature.
